# DEMANDE DE BREVET EUROPEEN

(11) **EP 4 343 129 A1**
(43) Date de publication de la demande: **27.03.2024**
(21) Numéro de dépôt: 23198420.4
(22) Date de dépôt: 20.09.2023
(51) Int. Cl.: F02C 3/22, F02C 7/232, F02C 9/32

(54) **PROCÉDÉ DE CONTRÔLE D'UN DISPOSITIF D'ALIMENTATION D'UNE MOTORISATION D'AÉRONEF ET DISPOSITIF D'ALIMENTATION PERMETTANT LA MISE EN OEUVRE DE CE PROCÉDÉ**

(30) Priorité: 20.09.2022 FR 2209514
(71) Demandeur: AIRBUS OPERATIONS (S.A.S.), 31060 Toulouse (FR)
(72) Inventeur: BELLEVILLE, Mathieu, 31060 TOULOUSE (FR)
(74) Mandataire: Fantin, Laurent

(57) **Abrégé**

L'invention a pour objet un procédé de contrôle d'un dispositif d'alimentation en carburant d'au moins une motorisation (18) d'aéronef. Selon l'invention, le procédé comprend une étape de détermination de l'état d'un système de contrôle du débit du carburant (32) suite à un changement d'état l'ayant écarté d'un état initial, une étape de modification de la pression du carburant en fonction de l'état déterminé du système de contrôle du débit du carburant (32) ainsi qu'une étape de changement d'état du système de contrôle du débit du carburant (32) le ramenant à ou le rapprochant de l'état initial.

L'invention a également pour objet un dispositif d'alimentation permettant la mise en oeuvre dudit procédé.

## Description

La présente demande se rapporte à un procédé de contrôle d'un dispositif d'alimentation d'une motorisation d'aéronef ainsi qu'à un dispositif d'alimentation permettant la mise en oeuvre dudit procédé.

Selon un mode de réalisation, un aéronef comprend au moins un dispositif d'alimentation, reliant au moins un réservoir de carburant et au moins une motorisation, configuré pour alimenter en carburant ladite motorisation.

Dans le cas d'un aéronef fonctionnant à l'hydrogène, le réservoir de carburant est configuré pour stocker l'hydrogène à l'état liquide et cryogénique, à une pression de stockage inférieure ou égale à 5 bars et une température de stockage inférieure ou égale à 25 K (environ -250°C).

Dans la mesure où l'hydrogène doit présenter au moment de sa combustion une température de combustion de l'ordre de 300 K (environ +27°C) et une pression de combustion généralement comprise entre moins de 1 bar (en régime ralenti en vol) et environ 60 bars (puissance maximum au sol), le dispositif d'alimentation comprend un système de pressurisation configuré pour comprimer l'hydrogène de la pression de stockage à la pression de combustion ainsi qu'un échangeur thermique configuré pour chauffer l'hydrogène de la température de stockage à la température de combustion. La pression maximale du système de pressurisation peut être égale au double de la pression de combustion, soit jusqu'à environ 150 bars.

En complément, le dispositif d'alimentation comprend un système de contrôle du débit du carburant délivré à la motorisation permettant notamment de réguler son régime moteur. En fonction du régime moteur souhaité, le débit d'hydrogène alimentant la motorisation doit pouvoir varier sur une large plage allant de 6 g/s jusqu'à 600 g/s, ce qui correspond à une variation de 1 à 100 de la section de passage du système de contrôle du débit du carburant.

Un système de contrôle du débit fonctionnant sur une plage aussi importante est complexe et difficile à concevoir.

La présente invention vise à remédier à tout ou partie des inconvénients de l'art antérieur.

A cet effet, l'invention a pour objet un procédé de contrôle d'un dispositif d'alimentation en carburant d'au moins une motorisation d'aéronef, ledit dispositif d'alimentation comprenant au moins un système de pressurisation du carburant configuré pour comprimer le carburant à une pression donnée ainsi qu'au moins un système de contrôle du débit du carburant configuré pour occuper différents états, sur une plage d'états bornée par des premier et deuxième états extrêmes, afin de délivrer à la motorisation une quantité de carburant donnée à une pression de carburant donnée dans chacun desdits états, le système de contrôle du débit du carburant étant configuré pour occuper un état initial.

Selon l'invention, le procédé comprend une étape de détermination de l'état du système de contrôle du débit du carburant suite à un changement d'état l'ayant écarté de l'état initial, suivie d'une étape de modification de la pression du carburant générée par le système de pressurisation du carburant en fonction de l'état déterminé du système de contrôle du débit du carburant, suivie d'une étape de changement d'état du système de contrôle du débit du carburant le ramenant ou le rapprochant de l'état initial.

Dans le cas d'un aéronef fonctionnant à l'hydrogène, ce procédé permet de faire varier la quantité de carburant délivrée à la motorisation sur une large plage même en utilisant un système de contrôle du débit du carburant présentant une plage de fonctionnement restreinte.

Selon une autre caractéristique, l'étape de détermination de l'état du système de contrôle du débit du carburant consiste à déterminer un sens de variation de l'état du système de contrôle du débit du carburant parmi un premier sens d'augmentation allant de l'état initial vers le premier état extrême et un deuxième sens de diminution allant de l'état initial vers le deuxième état extrême. En complément, l'étape de modification de la pression générée par le système de pressurisation du carburant consiste à modifier la pression générée dans un même sens de variation que le sens de variation déterminé pour l'état du système de contrôle du débit du carburant, l'étape de changement d'état du système de contrôle du débit du carburant consistant à le modifier dans un sens de variation opposé au sens de variation déterminé.

Selon une autre caractéristique, l'étape de détermination de l'état du système de contrôle du débit du carburant consiste à déterminer une valeur du changement d'état entre l'état initial et l'état déterminé. En complément, l'étape de modification de la pression générée par le système de pressurisation du carburant consiste à modifier la pression générée d'une valeur qui est une fonction de conversion de la valeur du changement d'état déterminée, l'étape de changement d'état du système de contrôle du débit du carburant consistant à le modifier d'une valeur sensiblement égale à la valeur de changement d'état déterminée.

Selon une autre caractéristique, la fonction de conversion comprend un gain ajustable. En complément, le procédé de contrôle comprend une étape d'ajustement du gain de la fonction de conversion de manière à éviter que le système de contrôle du débit du carburant ne s'immobilise dans un des premier et deuxième états extrêmes ou n'oscille.

Selon une autre caractéristique, la plage d'états du système de contrôle du débit du carburant comprend un état médian tel que la plage d'états comporte approximativement autant d'états entre l'état médian et le premier état extrême qu'entre l'état médian et le deuxième état extrême, l'état initial correspondant à l'état médian.

Selon une autre caractéristique, l'état du système du contrôle du débit du carburant est déterminé par un capteur configuré pour générer un signal d'état en fonction de l'état déterminé par le capteur. En complément, le procédé de contrôle comprend une étape de traitement du signal d'état.

Selon une autre caractéristique, le procédé comprend une étape de détermination d'au moins un état intermédiaire entre l'état initial et l'état déterminé par le capteur. En complément, pour chaque état intermédiaire, le procédé comprend une étape de modification de la pression générée par le système de pressurisation du carburant en fonction de l'état déterminé ou de l'état intermédiaire précédent du système de contrôle du débit du carburant suivie d'une étape de changement d'état du système de contrôle du débit du carburant le ramenant ou le rapprochant de l'état initial.

L'invention a également pour objet un dispositif d'alimentation en carburant d'une motorisation d'aéronef permettant la mise en oeuvre du procédé de contrôle selon l'une des caractéristiques précédentes. Selon l'invention, le système de contrôle du débit du carburant comprend un capteur configuré pour déterminer l'état du système de contrôle du débit du carburant et générer un signal d'état en fonction de l'état déterminé du système de contrôle du débit du carburant. En complément, le dispositif d'alimentation est configuré pour piloter le système de pressurisation du carburant et le système de contrôle du débit du carburant en fonction du signal d'état généré par le capteur.

Selon une autre caractéristique, le capteur est configuré pour déterminer l'état du système de contrôle du débit du carburant, un sens de variation de l'état ainsi que la valeur de changement d'état entre l'état initial et l'état déterminé.

Selon une autre caractéristique, la plage d'états du système de contrôle du débit du carburant comprend un état médian tel que la plage d'états comporte approximativement autant d'états entre l'état médian et le premier état extrême qu'entre l'état médian et le deuxième état extrême. En complément, l'état initial correspond à l'état médian.

D'autres caractéristiques et avantages ressortiront de la description de l'invention qui va suivre, description donnée à titre d'exemple uniquement, en regard des dessins annexés parmi lesquels :

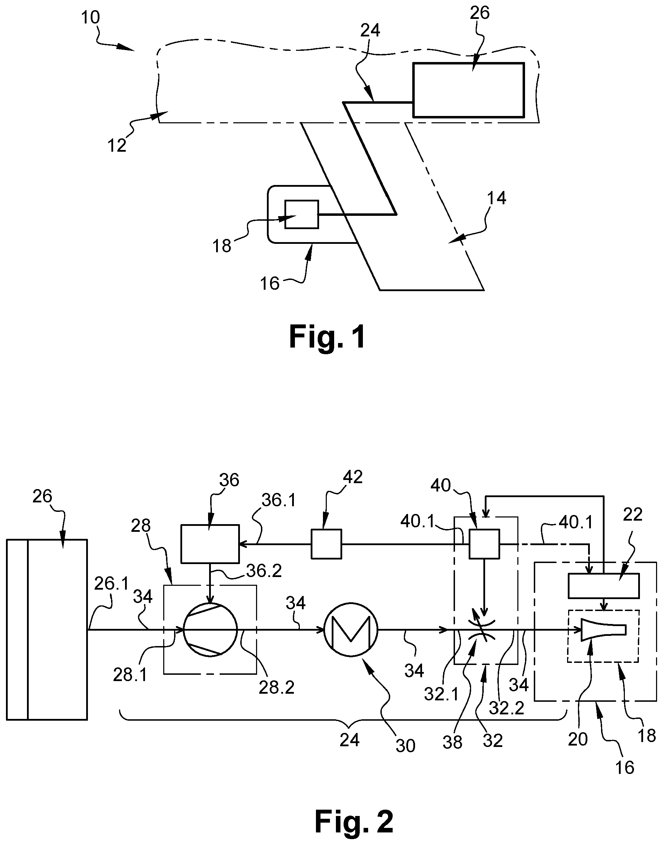

- La figure 1 est une représentation schématique d'un aéronef,
- La figure 2 est une représentation schématique d'un dispositif d'alimentation d'une motorisation illustrant un mode de réalisation de l'invention.

Selon un mode de réalisation, un aéronef 10 comprend un fuselage 12, une voilure 14 ainsi que plusieurs ensembles de propulsion 16 reliés au fuselage 12 ou à la voilure 14.

Chaque ensemble de propulsion 16 comprend une motorisation 18 comportant au moins une chambre de combustion alimentée par au moins un injecteur 20 configuré pour injecter une quantité de carburant donnée dans la chambre de combustion ainsi qu'un système de commande moteur 22 configuré pour contrôler la motorisation 18 et notamment réguler son régime moteur.

Dans le cas d'un aéronef fonctionnant à l'hydrogène, ce dernier présente, lors de son introduction dans la chambre de combustion, des pression et température de combustion données. Pour donner un ordre de grandeur, la pression de combustion est comprise entre 1 et 60 bars et la température de combustion est de l'ordre de 300 K (environ +27°C). L'aéronef 10 comprend au moins un dispositif d'alimentation en carburant 24, reliant au moins un réservoir de carburant 26 et au moins une motorisation 18, configuré pour alimenter en carburant ladite motorisation 18.

Dans le cas d'un aéronef fonctionnant à l'hydrogène, le réservoir de carburant 26 est configuré pour stocker de l'hydrogène à l'état liquide et cryogénique, à des pression et température de stockage données. Le réservoir de carburant 26 comprend au moins une sortie 26.1. Pour donner un ordre de grandeur, la pression de stockage est inférieure ou égale à 5 bars et la température de stockage est inférieure ou égale à 25 K (environ -250°C).

Selon un mode de réalisation, le dispositif d'alimentation en carburant 24 comprend au moins un système de pressurisation du carburant 28, au moins un système de chauffage du carburant 30, au moins un système de contrôle du débit du carburant 32 ainsi qu'un ensemble de conduits 34 configurés pour acheminer le carburant du réservoir de carburant 26, plus particulièrement de la sortie 26.1 du réservoir de carburant 26 jusqu'à la motorisation 18 et plus particulièrement jusqu'à au moins un injecteur 20 de la motorisation 18, en passant à travers le système de pressurisation du carburant 28, le système de chauffage du carburant 30 et le système de contrôle du débit du carburant 32.

Selon une configuration, le système de chauffage du carburant 30 comprend au moins un échangeur thermique, qui présente au moins une entrée et au moins une sortie, configuré pour générer une augmentation de température du carburant entre l'entrée et la sortie. Selon un mode de fonctionnement, l'échangeur thermique est alimenté en un fluide chaud prélevé au niveau de l'ensemble de propulsion 16. Le système de chauffage du carburant 30 n'est pas plus décrit car il peut être identique à celui de l'art antérieur.

Le système de pressurisation du carburant 28 comprend au moins une première entrée 28.1 ainsi qu'au moins une première sortie 28.2. Il est configuré pour comprimer le carburant à une pression donnée variable. En complément, le système de pressurisation du carburant 28 comprend une commande 36 configurée pour recevoir au moins un premier signal d'entrée 36.1, le système de pressurisation du carburant 28 comprimant le carburant à une pression de sortie donnée, au niveau de la première sortie 28.2, en fonction du signal d'entrée 36.1 reçu par la commande 36.

Selon un mode de réalisation, le système de pressurisation du carburant 28 comprend une pompe, notamment une pompe à haute pression. Selon ce mode de réalisation, la pression en sortie de la pompe est fonction de la vitesse de rotation de la pompe, la pression en sortie étant d'autant plus élevée que la vitesse de rotation est elle-même élevée. En complément, la commande 36 est configurée pour générer un signal de commande 36.2 en fonction du signal d'entrée 36.1, permettant de faire varier la vitesse de rotation de la pompe.

Le système de contrôle du débit du carburant 32 présente au moins une deuxième entrée 32.1, au moins une deuxième sortie 32.2 ainsi qu'une section de passage variable entre les deuxièmes entrée et sortie 32.1, 32.2. Ainsi, le système de contrôle du débit du carburant 32 est configuré pour occuper différents états sur une plage d'états bornée par un premier état extrême correspondant à une section de passage maximale ainsi que par un deuxième état extrême correspondant à une section de passage minimale. Dans chacun des états, le système de contrôle du débit du carburant 32 délivre à la motorisation 18 une quantité de carburant donnée à une pression de carburant donnée.

La plage d'états du système de contrôle du débit du carburant 32 comprend un état médian tel que la plage d'états comporte approximativement autant d'états entre l'état médian et le premier état extrême qu'entre l'état médian et le deuxième état extrême. A l'état médian, le système de contrôle du débit du carburant 32 présente une section de passage médiane approximativement égale à la moitié de la somme des sections de passage minimale et maximale.

Selon un mode de réalisation, le système de contrôle du débit du carburant 32 comprend une vanne 38 configurée pour occuper différentes positions entre une première position extrême correspondant au premier état extrême du système de contrôle du débit du carburant 32 dans laquelle la vanne 38 présente une section de passage maximale et une deuxième position extrême correspondant au deuxième état extrême du système de contrôle du débit du carburant 32 dans laquelle la vanne 38 présente une section de passage minimale, la vanne 38 étant configurée pour occuper une position médiane approximativement à équidistance des première et deuxième positions extrêmes.

Le système de contrôle du débit du carburant 32 comprend un capteur 40 configuré pour déterminer l'état du système de contrôle du débit du carburant 32 et générer un signal d'état 40.1 en fonction de l'état du système de contrôle du débit du carburant 32 déterminé par le capteur 40. Selon un mode de réalisation, le capteur 40 est configuré pour déterminer la position de la vanne 38 et générer un signal d'état 40.1 en fonction de la position déterminée de la vanne 38.

A minima, le dispositif d'alimentation en carburant 24 comprend au moins un système de pressurisation du carburant 28 configuré pour comprimer le carburant à une pression donnée ainsi qu'au moins un système de contrôle du débit du carburant 32 configuré pour occuper différents états (continus ou discrets) et, pour chacun d'eux, délivrer à la motorisation 18 une quantité de carburant donnée. Le système de contrôle du débit du carburant 32 est configuré pour occuper un état initial dans lequel le système de contrôle du débit du carburant 32 délivre une quantité de carburant initiale

Un procédé de contrôle du dispositif d'alimentation en carburant 24 comprend, suite à un changement de la quantité de carburant délivrée à la motorisation 18 lors duquel l'état du système de contrôle du débit du carburant 32 est modifié et écarté de l'état initial, une étape de détermination de l'état du système de contrôle du débit du carburant 32, suivie d'une étape de modification de la pression générée par le système de pressurisation du carburant 28 en fonction de l'état déterminé du système de contrôle du débit du carburant 32, suivie d'une étape de changement d'état du système de contrôle du débit du carburant 32 le ramenant à ou le rapprochant de l'état initial. Les étapes de modification de la pression et de changement d'état ne sont pas coordonnées de manière à conserver sensiblement constante la quantité de carburant délivrée à la motorisation 18. Le système de contrôle du débit du carburant 32 réagit au changement de pression à son entrée afin de maintenir la quantité de carburant souhaitée délivrée à la motorisation 18.

L'étape de changement d'état du système de contrôle du débit du carburant est réalisée en réaction à l'étape de modification de la pression du carburant générée par le système de pressurisation du carburant.

Le débit de carburant délivré à la motorisation dépend de la pression du carburant, de la température du carburant et de la section de passage du carburant vers la chambre de combustion. Le système de contrôle du débit du carburant contrôle uniquement la section de passage du carburant vers la chambre de combustion. Lorsque le système de pressurisation augmente la pression du carburant, le système de contrôle du débit du carburant observe une augmentation du débit de carburant et, en réaction, commande une diminution du débit de carburant.

Selon l'invention, il y a donc deux boucles de rétroaction indépendantes et non coordonnées : une première boucle de rétroaction qui contrôle le débit du carburant par une action sur la section de passage du carburant vers la chambre de combustion, le débit effectif dépendant de la pression du carburant en amont, et une deuxième boucle de rétroaction qui contrôle la pression du carburant, le choix de la pression étant libre mais conditionné par les deux états extrêmes du système de contrôle du débit de carburant.

A titre d'exemple, le changement de la quantité de carburant délivrée à la motorisation 18 intervient notamment lors d'un changement du régime moteur de la motorisation 18.

Dans le cas d'un aéronef fonctionnant à l'hydrogène, ce procédé permet de pouvoir faire varier la quantité de carburant délivrée à la motorisation 18 sur une large plage même en utilisant un système de contrôle du débit du carburant 32 présentant une plage de fonctionnement restreinte.

Selon un mode de réalisation, l'étape de détermination de l'état du système de contrôle du débit du carburant 32 consiste à déterminer un sens de variation de l'état du système de contrôle du débit du carburant 32 parmi un premier sens d'augmentation allant de l'état initial vers le premier état extrême et un deuxième sens de diminution allant de l'état initial vers le deuxième état extrême. En complément, l'étape de modification de la pression générée par le système de pressurisation du carburant 28 consiste à modifier la pression générée dans un même sens de variation que le sens de variation déterminé pour l'état du système de contrôle du débit du carburant 32. L'étape de changement d'état du système de contrôle du débit du carburant 32 consiste à le modifier dans un sens de variation opposé au sens de variation déterminé. Ainsi, si l'état déterminé est situé entre l'état initial et le premier état extrême, ce qui correspond à une variation de l'état dans un premier sens d'augmentation de la section de passage, la pression générée par le système de pressurisation du carburant 28 est augmentée. La pression générée par le système de pressurisation du carburant 28 étant augmentée, l'état du système de contrôle du débit du carburant 32 est modifié afin de maintenir le débit de carburant au niveau souhaité, ce qui aboutit à le ramener à ou le rapprocher de l'état initial. A contrario, si l'état déterminé est situé entre l'état initial et le deuxième état extrême, ce qui correspond à une variation de l'état dans un deuxième sens de diminution de la section de passage, la pression générée par le système de pressurisation du carburant 28 est diminuée. La pression générée par le système de pressurisation du carburant 28 étant diminuée, l'état du système de contrôle du débit du carburant 32 est modifié afin de maintenir le débit de carburant au niveau souhaité, ce qui aboutit à le ramener à ou le rapprocher de l'état initial.

Selon une configuration, l'état initial correspond à l'état médian, ce qui permet d'obtenir une plage de fonctionnement aussi grande dans le premier sens d'augmentation que dans le deuxième sens de diminution.

Selon une configuration, l'étape de détermination de l'état du système de contrôle du débit du carburant 32 consiste à déterminer un sens de variation de l'état du système de contrôle du débit du carburant 32 ainsi qu'une valeur du changement d'état entre l'état initial et l'état déterminé. En complément, l'étape de modification de la pression générée par le système de pressurisation du carburant 28 consiste à modifier la pression générée dans un même sens de variation que le sens de variation déterminé pour l'état du système de contrôle du débit du carburant 32 et d'une valeur qui est une fonction de conversion de la valeur du changement d'état déterminée. En suivant, l'étape de changement d'état du système de contrôle du débit du carburant 32 consiste à le modifier dans un sens de variation opposé au sens de variation déterminé et d'une valeur sensiblement égale à la valeur de changement d'état déterminée. Selon cette configuration, le capteur 40 est configuré pour déterminer l'état du système de contrôle du débit du carburant 32, un sens de variation de l'état ainsi que la valeur de changement d'état entre l'état initial et l'état déterminé.

Selon un premier mode de réalisation, le capteur 40 est configuré pour :
- déterminer, en fonction du sens de variation et de la valeur du changement d'état qu'il a déterminés, le sens de variation et la valeur du changement de la pression qui doivent être appliqués au système de pressurisation du carburant 28,
- générer un signal d'état 40.1 en fonction du sens de variation et de la valeur du changement de la pression déterminés, et
- transmettre ce signal d'état 40.1 directement à la commande 36 en tant que signal d'entrée 36.1, le système de pressurisation du carburant 28 comprimant le carburant à une nouvelle valeur en fonction du signal d'entrée 36.1 reçu.

Selon un deuxième mode de réalisation, le capteur 40 est configuré pour générer un signal d'état 40.1 en fonction du sens de variation et de la valeur du changement d'état déterminés par le capteur 40.

Ce signal d'état 40.1 est transmis directement à la commande 36 en tant que signal d'entrée 36.1. Cette dernière est configurée pour déterminer, en fonction du signal d'entrée 36.1, le sens de variation et la valeur du changement de la pression que doit réaliser le système de pressurisation du carburant 28 ainsi que pour générer un signal de commande 36.2 en fonction du sens de variation et de la valeur du changement de pression déterminés.

En variante, le signal d'état 40.1 est transmis au système de commande moteur 22. Ce dernier est configuré pour déterminer, en fonction du signal d'état 40.1 reçu, le sens de variation et la valeur du changement de la pression que doit réaliser le système de pressurisation du carburant 28 et générer un signal d'entrée 36.1 à la commande 36 en fonction du sens de variation et de la valeur du changement de la pression déterminés.

Selon une configuration, le système de commande moteur 22 peut contrôler indépendamment le système de pressurisation du carburant 28 et le système de contrôle du débit du carburant 32.

Quel que soit le mode de réalisation, le dispositif d'alimentation est configuré pour piloter le système de pressurisation du carburant 28 et le système de contrôle du débit du carburant 32 en fonction du signal d'état 40.1 généré par le capteur 40, le pilotage du système de contrôle du débit du carburant 32 étant réalisé en réaction au pilotage du système de pressurisation du carburant 28. En particulier, le dispositif d'alimentation est configuré pour piloter le système de pressurisation du carburant 28 en fonction du signal d'état généré par le capteur 40 puis pour piloter, en réaction au changement de pression délivrée par le système de pressurisation du carburant 28, le système de contrôle du débit du carburant 32. Le dispositif d'alimentation pilote ainsi le système de pressurisation du carburant 28 et le système de contrôle du débit du carburant 32 de façon découplée, i.e. non coordonnée.

Selon un mode opératoire, le procédé de contrôle comprend une étape de traitement du signal d'état 40.1, par exemple par un filtre passe-bas ou par une hystérésis, s'il est souhaité une stabilisation ou d'éviter des oscillations. Par exemple, il peut aussi être souhaité que le système de contrôle du débit de carburant réagisse rapidement tandis que le système de pressurisation réagisse plus lentement. A titre d'exemple, le dispositif d'alimentation en carburant 24 comprend un filtre passe-bas 42 pour traiter le signal d'état 40.1. Dans le cas d'un système de pressurisation du carburant comportant une pompe, ce mode de réalisation permet d'éviter les variations de vitesse trop brutales de la pompe, notamment si cette dernière présente une inertie insuffisante.

La fonction de conversion, permettant de déterminer la valeur du changement de pression à partir de la valeur du changement d'état, présente un gain ajustable en relation avec la dynamique souhaitée pour la motorisation 18. Le procédé de contrôle du dispositif d'alimentation en carburant 24 comprend une étape d'ajustement du gain de la fonction de conversion de manière à éviter que le système de contrôle du débit du carburant 32 ne s'immobilise dans un des premier et deuxième états extrêmes ou n'oscille.

Selon un premier mode opératoire, le changement de la pression générée par le système de pressurisation du carburant 28 et le retour du système de contrôle du débit du carburant 32 dans l'état médian sont réalisés en une seule phase.

Selon un deuxième mode opératoire, la modification de la pression générée par le système de pressurisation du carburant 28 et le retour du système de contrôle du débit du carburant 32 dans l'état initial sont réalisés en au moins deux phases. Ce deuxième mode opératoire permet d'éviter les phénomènes de résonance entre le système de pressurisation du carburant 28 et le système de contrôle du débit du carburant 32.

Selon ce deuxième mode opératoire, le procédé comprend une étape de détermination d'au moins un état intermédiaire entre l'état initial et l'état déterminé par le capteur 40. Pour chaque état intermédiaire, le procédé comprend une étape de modification de la pression générée par le système de pressurisation du carburant 28 en fonction de l'état déterminé ou de l'état intermédiaire précédent du système de contrôle du débit du carburant 32 suivie d'une étape de changement d'état du système de contrôle du débit du carburant 32 le ramenant à ou le rapprochant de l'état initial.

## Revendications

1. Procédé de contrôle d'un dispositif d'alimentation en carburant d'au moins une motorisation (18) d'aéronef, ledit dispositif d'alimentation comprenant au moins un système de pressurisation du carburant (28) configuré pour comprimer le carburant à une pression donnée ainsi qu'au moins un système de contrôle du débit du carburant (32) configuré pour occuper différents états sur une plage d'états bornée par des premier et deuxième états extrêmes, délivrer à la motorisation (18) une quantité de carburant donnée à une pression de carburant donnée dans chacun desdits états et occuper un état initial ; **caractérisé en ce que** le procédé comprend une étape de détermination de l'état du système de contrôle du débit du carburant (32) suite à un changement d'état l'ayant écarté de l'état initial, suivie d'une étape de modification de la pression du carburant générée par le système de pressurisation du carburant (28) en fonction de l'état déterminé du système de contrôle du débit du carburant (32), suivie d'une étape de changement d'état du système de contrôle du débit du carburant (32) le ramenant ou le rapprochant de l'état initial.

2. Procédé de contrôle d'un dispositif d'alimentation en carburant selon la revendication 1, **caractérisé en ce que** l'étape de détermination de l'état du système de contrôle du débit du carburant (32) consiste à déterminer un sens de variation de l'état du système de contrôle du débit du carburant (32) parmi un premier sens d'augmentation allant de l'état initial vers le premier état extrême et un deuxième sens de diminution allant de l'état initial vers le deuxième état extrême, **en ce que** l'étape de modification de la pression générée par le système de pressurisation du carburant (28) consiste à modifier la pression générée dans un même sens de variation que le sens de variation déterminé pour l'état du système de contrôle du débit du carburant (32) et **en ce que** l'étape de changement d'état du système de contrôle du débit du carburant (32) consiste à le modifier dans un sens de variation opposé au sens de variation déterminé.

3. Procédé de contrôle d'un dispositif d'alimentation en carburant selon la revendication précédente, **caractérisé en ce que** l'étape de détermination de l'état du système de contrôle du débit du carburant (32) consiste à déterminer une valeur du changement d'état entre l'état initial et l'état déterminé, **en ce que** l'étape de modification de la pression générée par le système de pressurisation du carburant (28) consiste à modifier la pression générée d'une valeur qui est une fonction de conversion de la valeur du changement d'état déterminée et **en ce que** l'étape de changement d'état du système de contrôle du débit du carburant (32) consiste à le modifier d'une valeur sensiblement égale à la valeur de changement d'état déterminée.

4. Procédé de contrôle d'un dispositif d'alimentation en carburant selon la revendication précédente, **caractérisé en ce que** la fonction de conversion comprend un gain ajustable et **en ce que** le procédé de contrôle comprend une étape d'ajustement du gain de la fonction de conversion de manière à éviter que le système de contrôle du débit du carburant (32) ne s'immobilise dans un des premier et deuxième états extrêmes ou n'oscille.

5. Procédé de contrôle d'un dispositif d'alimentation en carburant selon l'une des revendications précédentes, **caractérisé en ce que** la plage d'états du système de contrôle du débit du carburant (32) comprend un état médian tel que la plage d'états comporte approximativement autant d'états entre l'état médian et le premier état extrême qu'entre l'état médian et le deuxième état extrême et **en ce que** l'état initial correspond à l'état médian.

6. Procédé de contrôle d'un dispositif d'alimentation en carburant selon l'une des revendications précédentes, **caractérisé en ce que** l'état du système du contrôle du débit du carburant (32) est déterminé par un capteur (40) configuré pour générer un signal d'état (40.1) en fonction de l'état déterminé par le capteur (40) et **en ce que** le procédé de contrôle comprend une étape de traitement du signal d'état (40.1).

7. Procédé de contrôle d'un dispositif d'alimentation en carburant selon l'une des revendications précédentes, **caractérisé en ce que** le procédé comprend une étape de détermination d'au moins un état intermédiaire entre l'état initial et l'état déterminé par le capteur (40) et **en ce que**, pour chaque état intermédiaire, le procédé comprend une étape de modification de la pression générée par le système de pressurisation du carburant (28) en fonction de l'état déterminé ou de l'état intermédiaire précédent du système de contrôle du débit du carburant (32) suivie d'une étape de changement d'état du système de contrôle du débit du carburant (32) le ramenant ou le rapprochant de l'état initial.

8. Dispositif d'alimentation en carburant d'une motorisation d'aéronef permettant la mise en oeuvre du procédé de contrôle selon l'une des revendications précédentes, ledit dispositif d'alimentation comprenant au moins un système de pressurisation du carburant (28) configuré pour comprimer le carburant à une pression donnée ainsi qu'au moins un système de contrôle du débit du carburant (32) configuré pour occuper différents états sur une plage d'états bornée par des premier et deuxième états extrêmes, délivrer à la motorisation (18) une quantité de carburant donnée à une pression de carburant donnée dans chacun desdits états et occuper un état initial, **caractérisé en ce que** le système de contrôle du débit du carburant (32) comprend un capteur (40) configuré pour déterminer l'état du système de contrôle du débit du carburant (32) et générer un signal d'état (40.1) en fonction de l'état déterminé du système de contrôle du débit du carburant (32) et **en ce que** le dispositif d'alimentation est configuré pour piloter le système de pressurisation du carburant (28) et le système de contrôle du débit du carburant (32) en fonction du signal d'état (40.1) généré par le capteur (40).

9. Dispositif d'alimentation selon la revendication précédente, **caractérisé en ce que** le capteur (40) est configuré pour déterminer l'état du système de contrôle du débit du carburant (32), un sens de variation de l'état ainsi que la valeur de changement d'état entre l'état initial et l'état déterminé.

10. Dispositif d'alimentation selon l'une des revendications 8 à 9, **caractérisé en ce que** la plage d'états du système de contrôle du débit du carburant (32) comprend un état médian tel que la plage d'états comporte approximativement autant d'états entre l'état médian et le premier état extrême qu'entre l'état médian et le deuxième état extrême et **en ce que** l'état initial correspond à l'état médian.
